# EUROPEAN PATENT APPLICATION

(11) **EP 4 546 122 A1**
(43) Date of publication of application: **30.04.2025**
(21) Application number: 23825900.6
(22) Date of filing: 12.04.2023
(51) Int. Cl.: G06F 9/44, G06F 11/36

(54) **EMBEDDED SOFTWARE MODEL ARCHITECTURE, BATTERY MANAGEMENT SYSTEM CONTROLLER, AND VEHICLE**

(30) Priority: 24.06.2022 CN 202210729854
(71) Applicant: BYD Company Limited, Shenzhen, Guangdong 518118 (CN)
(72) Inventor: SHEN, Xiaofeng, Shenzhen, Guangdong 518118 (CN); HUA, Chongru, Shenzhen, Guangdong 518118 (CN); YUE, Xiang, Shenzhen, Guangdong 518118 (CN)
(74) Representative: Taor, Simon Edward William
(86) International application number: PCT/CN2023/087856
(87) International publication number: WO 2023/246245

(57) **Abstract**

An embedded software model architecture (100), a battery management system controller (300), and a vehicle (400). The embedded software model architecture (100) comprises: a project determination unit (101), at least one project unit (102), and a model-level output signal summary unit (103). The project determination unit (101) is used for outputting, according to a target unit needing to be processed by the embedded software model architecture (100), a project enable signal corresponding to the target unit, wherein the target unit is one of the at least one project unit (102), the project enable signal is used for triggering the startup of the target unit, so as to realize a corresponding logic control strategy, and the target unit is used for receiving the project enable signal and outputting a unit-level output summary signal according to the project enable signal. The model-level output signal summary unit (103) is used for receiving the unit-level output summary signal, and outputting a model-level output summary signal.

## Description

### CROSS-REFERENCE TO RELATED APPLICATIONS

The present disclosure claims priority to Chinese Patent Application No. 202210729854.8, filed on June 24, 2022 and entitled "EMBEDDED SOFTWARE MODEL ARCHITECTURE, BATTERY MANAGEMENT SYSTEM CONTROLLER, AND VEHICLE". The entire content of the above-referenced application is incorporated herein by reference.

### FIELD

The present disclosure relates to the field of software model design technologies, and more specifically, to an embedded software model architecture, a battery management system controller, and a vehicle.

### BACKGROUND

An embedded software model architecture has characteristics such as strong model visibility, easy maintenance, automatic code generation, and applicable to writing of a complex logic, and is applied to many scenarios.

An existing embedded software model architecture mainly includes multiple units. Functions of the units are independent of each other, and each unit executes a different logic. Different projects have different strategies, and unit division of models and logics inside units are also different. Therefore, a developer needs to specially maintain a model version for each project. A larger quantity of projects indicate a larger quantity of model versions that need to be maintained, which may lead to problems such as a heavy workload of model maintenance, a large amount of maintenance content, and difficulty in tracing as a result of model version disorder. The developer expects to reduce a quantity of models from the source, decrease the workload of model maintenance, and apply as many projects as possible to a same embedded software model architecture. Therefore, embedded software model architecture a universal platform.

### SUMMARY

An object of the present disclosure is to provide a new technical solution of an embedded software model architecture, a battery management system controller, and a vehicle. The model architecture can be applied to different projects, to ensure that different projects may use a same version of the embedded software model architecture, and therefore the model is formed as a universal platform, thereby reducing a workload of model maintenance.

According to a first aspect of the present disclosure, an embedded software model architecture is provided. The embedded software model architecture includes a project determination unit, at least one project unit, and a model-level output signal summary unit. The project determination unit is configured to output, based on a target unit that the embedded software model architecture needs to process, a project enable signal corresponding to the target unit. The target unit is one of the at least one project unit. The project enable signal is used for triggering startup of the target unit to realize a corresponding logic control strategy. The target unit is configured to receive the project enable signal, and output a unit-level output summary signal based on the project enable signal. The model-level output signal summary unit is configured to receive the unit-level output summary signal, and output a model-level output summary signal.

In some implementations, the project determination unit is arranged on a top layer of the entire embedded software model architecture, to control the entire software model architecture, and perform switching between the at least one project unit.

In some implementations, the project determination unit includes a first calibration unit and a first selection unit. The first calibration unit is configured to output at least one first calibration parameter based on the target unit. The at least one first calibration parameter is in one-to-one correspondence with the at least one project unit. The first selection unit is configured to receive the at least one first calibration parameter, and output the project enable signal based on the at least one first calibration parameter.

In some implementations, the at least one project unit is arranged in parallel, and is connected with the project determination unit.

In some implementations, the at least one project unit is configured to receive an external input signal of the embedded software model architecture. The target unit is specifically configured to output the unit-level output summary signal based on the external input signal of the embedded software model architecture and the project enable signal.

In some implementations, each project unit of the at least one project unit includes at least one functional unit. Each functional unit of the at least one functional unit is configured to output the unit-level output summary signal.

In some implementations, the at least one functional unit is independent of each other. The at least one functional unit is arranged in parallel.

In some implementations, each functional unit of the at least one functional unit includes a logic determination unit, at least one logic execution unit, and a unit-level output signal summary unit. The logic determination unit is configured to output a logic enable signal based on a sub-project corresponding to the project unit. Each logic execution unit of the at least one logic execution unit is configured to receive the logic enable signal, and output a first logic signal based on the logic enable signal. The unit-level output signal summary unit is configured to summarize the first logic signal outputted by the at least one logic execution unit, to obtain the unit-level output summary signal.

In some implementations, the logic determination unit includes a second calibration unit and a second selection unit. The second calibration unit is configured to output at least one second calibration parameter based on the target unit. The at least one second calibration parameter is in one-to-one correspondence with the at least one logic execution unit. The second selection unit is configured to receive the at least one second calibration parameter, and output the logic enable signal based on the at least one second calibration parameter.

In some implementations, an input signal interface of each logic execution unit of the at least one logic execution unit is the same. An output signal interface of each logic execution unit of the at least one logic execution unit is the same.

In some implementations, each logic execution unit of the at least one logic execution unit includes different sub-projects. Different sub-projects of a same logic execution unit use a same logic. The same logic includes different parameters. The different parameters are in one-to-one correspondence with the different sub-projects.

In some implementations, the project determination unit is further configured to redetermine a new target unit after the target unit outputs the model-level output summary signal, to realize switching between different project units.

In some implementations, an input interface of each project unit of the at least one project unit is the same. An output interface of each project unit of the at least one project unit is the same.

According to a second aspect of the present disclosure, a battery management system controller is further provided. The battery management system controller includes a control chip and an embedded software model architecture arranged on the control chip. The embedded software model architecture is the embedded software model architecture in any implementation of the first aspect.

According to a third aspect of the present disclosure, a vehicle is further provided. The vehicle includes the battery management system controller in any implementation of the second aspect and an energy storage apparatus electrically connected with the battery management system controller.

A beneficial effect of the present disclosure is that the model architecture of this embodiment includes the project determination unit, the at least one project unit, and the model-level output signal summary unit. Different projects may be selected through the project determination unit, a logic of a selected project is implemented for the selected project by using the project unit, and finally a model-level output signal is outputted externally. To be specific, the at least one project unit may include multiple project units of different types, and the different project units may all adopt the model architecture. In this way, the same version of the embedded software model architecture can be applied to different projects, and therefore embedded software model architecture a universal platform, thereby reducing the workload of model maintenance.

Other features and advantages of embodiments of the present disclosure become apparent through the following detailed description of exemplary embodiments of the present disclosure with reference to the accompanying drawings.

### BRIEF DESCRIPTION OF THE DRAWINGS

The accompanying drawings that are incorporated into and constitute a part of the specification illustrate embodiments of the present disclosure, and are used to explain the principle of the embodiments of the present disclosure together with the description.
FIG. 1 is an architecture diagram of an embedded software model architecture according to an embodiment of the present disclosure;
FIG. 2 is an architecture diagram of a project determination unit according to an embodiment of the present disclosure;
FIG. 3 is an architecture diagram of a project unit according to an embodiment of the present disclosure;
FIG. 4 is an architecture diagram of a functional unit according to an embodiment of the present disclosure;
FIG. 5 is a framework diagram of a logic determination unit according to an embodiment of the present disclosure;
FIG. 6 is an architecture diagram of a logic execution unit according to an embodiment of the present disclosure;
FIG. 7 is an architecture diagram of a unit-level output signal summary unit according to an embodiment of the present disclosure;
FIG. 8 is a schematic diagram of a battery management system controller according to an embodiment of the present disclosure; and
FIG. 9 is a schematic diagram of a vehicle according to an embodiment of the present disclosure.

### DETAILED DESCRIPTION

Embodiments of the present disclosure are to be described in detail with reference to the accompanying drawings. It should be noted that, unless otherwise specified, relative arrangement, numerical expressions, and numerical values of components and steps described in the embodiments do not limit the scope of the present disclosure.

The following description of at least one embodiment is actually merely illustrative, and in no way constitute any limitation on the present disclosure and application or use thereof.

Technologies, methods, and devices known to a person of ordinary skill in the related art may not be discussed in detail, but in proper circumstances, the technologies, methods, and devices shall be regarded as a part of the specification.

In all examples shown and discussed herein, any specific value should be construed as merely exemplary and not as a limitation. Therefore, other examples of the embodiments may have different values.

It should be noted that, similar reference numerals and letters denote similar items in the following accompanying drawings. Therefore, once an item is defined in an accompanying drawing, the item does not need to be further discussed in subsequent accompanying drawings.

It should be noted that, all actions of obtaining a signal, information, or data in the present disclosure are performed under the premise of complying with corresponding data protection regulations and policies of a country where the present disclosure is located, and with authorization of a corresponding apparatus owner.

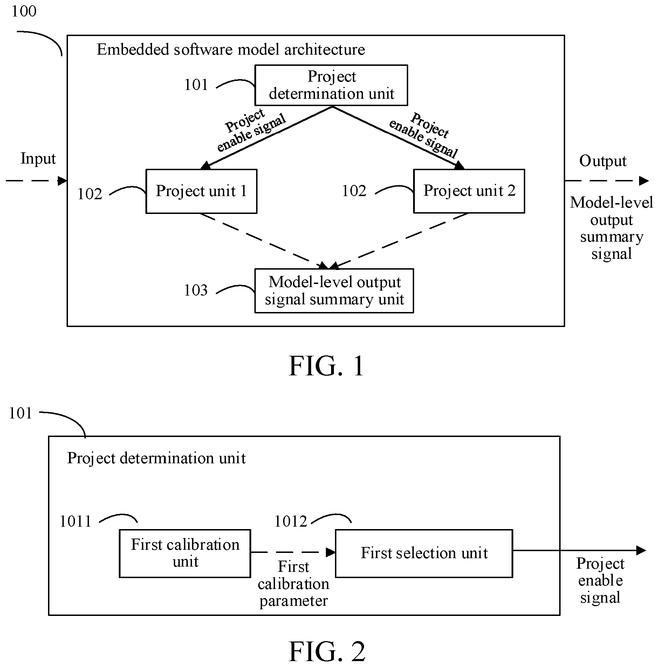

FIG. 1 is an architecture diagram of an embedded software model architecture according to an embodiment of the present disclosure. Referring to FIG. 1, an embedded software model architecture 100 includes a project determination unit 101, at least one project unit 102, and a model-level output signal summary unit 103. The project determination unit 101 is configured to output, based on a target unit that the embedded software model architecture 100 needs to process, a project enable signal corresponding to the target unit. The target unit is one of the at least one project unit 102. The project enable signal is used for triggering startup of the target unit to realize a corresponding logic control strategy. The target unit is configured to receive the project enable signal, and output a unit-level output summary signal based on the project enable signal. The model-level output signal summary unit 103 is configured to receive the unit-level output summary signal, and output a model-level output summary signal.

The model architecture of this embodiment includes the project determination unit, the at least one project unit, and the model-level output signal summary unit. Different projects may be selected through the project determination unit, a logic of a selected project is implemented for the selected project by using the project unit, and finally a model-level output signal is outputted externally. To be specific, the at least one project unit may include multiple project units of different types, and the different project units may all adopt the model architecture. In this way, a same version of the embedded software model architecture can be applied to different projects, and therefore embedded software model architecture a universal platform, thereby reducing the workload of model maintenance.

When the project unit of an existing model architecture cannot meet a requirement, only a project unit and a project enable signal corresponding to the project unit need to be added within the model architecture, so that a project logic may be implemented in the model architecture. Therefore, a new embedded software model architecture does not need to be developed. In this way, complexity of subsequent maintenance may be reduced, the workload may be reduced, and costs may be saved.

The project determination unit 101 may be placed on a top layer of the entire embedded software model architecture 100, to control the entire embedded software model architecture 100, perform switching between the at least one project unit 102, and the like.

In an embodiment, the project determination unit 101 may include a first calibration unit 1011 and a first selection unit 1012. As shown in FIG. 2, FIG. 2 is an architecture diagram of a project determination unit according to an embodiment of the present disclosure. A first calibration unit 1011 is configured to output at least one first calibration parameter based on a target unit. The at least one first calibration parameter is in one-to-one correspondence with at least one project unit. A first selection unit 1012 is configured to receive the at least one first calibration parameter, and output a project enable signal based on the at least one first calibration parameter.

A calibration unit (for example, the first calibration unit 1011 included in the project determination unit 101 in FIG. 2) may calibrate different calibration parameters, and different calibration parameters correspond to different project units. In this way, the calibration parameter (for example, the first calibration parameter in FIG. 2) may be caused to correspond to the project unit. For example, different calibration parameters may be set for different project units to distinguish the different project units. The calibration unit may directly output the calibration parameter, or may incorporate the calibration parameter into the signal before outputting the signal.

The first calibration unit 1011 may be connected with the first selection unit 1012. The first calibration unit 1011 may transmit a signal (or the first calibration parameter) of the first calibration parameter carried by the first calibration unit 1011 to the first selection unit 1012. In this way, a selection unit (for example, the first selection unit 1012) may select the project unit based on the project unit corresponding to the calibration parameter (for example, the first calibration parameter), to trigger different project units. Different project units are selected, so that a model architecture may process the different project units. To be specific, the model architecture may realize switching between the different project units.

A logic of a project selection unit (for example, the first selection unit 1012) is illustrated below. If a numerical value of a calibration parameter (for example, the first calibration parameter) is set to X, a project unit 1 is enabled; if the numerical value of the calibration parameter (for example, the first calibration parameter) is set to Y, a project unit 2 is enabled; and so on. In this way, if a logic of the project unit 1 is to be implemented, the numerical value of the first calibration parameter needs to be set to X, to trigger the enabling of the project unit 1; if a logic of the project unit 2 is to be implemented, the numerical value of the first calibration parameter needs to be set to Y, to trigger the enabling of the project unit 2; and so on. Through different data of the calibration parameter, the project unit corresponding to the calibration parameter is enabled, to trigger the project unit to execute a corresponding logic.

In an embodiment, the at least one project unit 102 is configured to receive an external input signal of an embedded software model architecture 100. The target unit is specifically configured to output a unit-level output summary signal based on the external input signal of the embedded software model architecture 100 and the project enable signal.

Each project unit is filled with corresponding code internally, for logic implementation of each project unit.

Different project units have a same input interface, and the different project units have a same output interface. In this way, an output signal type of the overall model architecture may be maintained consistent, thereby further maintaining the model architecture as a universal platform.

Multiple project units 102 may be arranged in parallel, are all connected with the project determination unit 101, and are triggered by the project determination unit 101 when needed.

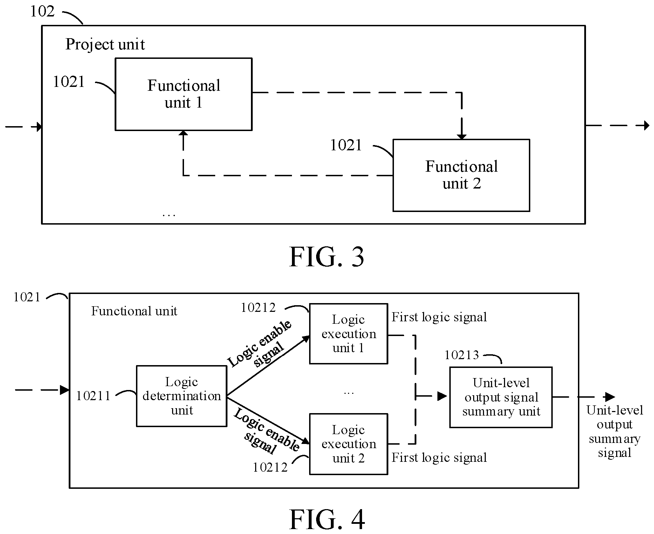

In an embodiment, each project unit (102) includes at least one functional unit (1021). Each functional unit (1021) is configured to output the unit-level output summary signal. As shown in FIG. 3, FIG. 3 is an architecture diagram of a project unit according to an embodiment of the present disclosure. A project unit 102 in FIG. 3 includes two functional units 1021. The number of functional units 1021 included in the project unit is not limited in the present disclosure. A project unit 102 may include one, two, or multiple functional units 1021, and different functional units 1021 may output different unit-level output summary signals.

The functional units 1021 may be filled with code internally, so that logic implementation of each function unit may be performed. The functional units 1021 are independent of each other. The multiple functional units 1021 may be arranged in parallel.

In an embodiment, the functional unit 1021 may include a logic determination unit 10211, at least one logic execution unit 10212, and a unit-level output signal summary unit 10213. As shown in FIG. 4, FIG. 4 is an architecture diagram of a functional unit according to an embodiment of the present disclosure. A logic determination unit 10211 is configured to output a logic enable signal based on a sub-project corresponding to a project unit 102. Each logic execution unit 10212 is configured to receive the logic enable signal, and output a first logic signal based on the logic enable signal. A unit-level output signal summary unit 10213 is configured to summarize the first logic signal outputted by at least one logic execution unit 10212, to obtain a unit-level output summary signal.

The functional unit may include the logic determination unit, the logic execution unit, and the unit-level output signal summary unit. Different logic units in a same functional unit have a same function. The same functional unit may be further divided into multiple logic units based on different logics. Each logic unit corresponds to a different logic. For the division of the architecture in the functional unit in this embodiment of the present disclosure, reference may be made to the division of the model architecture, and division methods thereof are substantially the same. The functional unit is further divided to realize different logics.

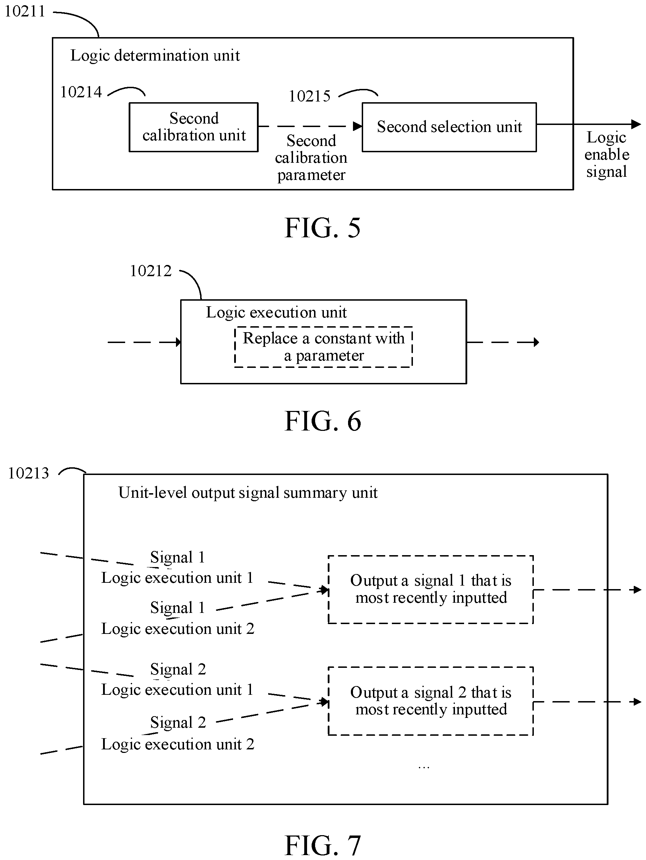

In an embodiment, the logic determination unit 10211 of the functional unit 1021 may include a second calibration unit 10214 and a second selection unit 10215. As shown in FIG. 5, FIG. 5 is a framework diagram of the logic determination unit according to an embodiment of the present disclosure. A second calibration unit 10214 is configured to output at least one second calibration parameter based on a target unit. The at least one second calibration parameter is in one-to-one correspondence with at least one logic execution unit 10212. A second selection unit 10215 is configured to receive the at least one second calibration parameter, and output a logic enable signal based on the at least one second calibration parameter.

A calibration unit (for example, the second calibration unit 10214 included in the functional unit 1021 in FIG. 5) may calibrate different calibration parameters, and different calibration parameters correspond to different logic units. In this way, the calibration parameter (for example, the second calibration parameter in FIG. 5) may be caused to correspond to the logic unit. For example, different calibration parameters may be set for different logic units to distinguish the different logic units. The second calibration unit may directly output the second calibration parameter, or may incorporate the second calibration parameter into the signal before outputting the signal.

The second calibration unit 10214 may be connected with the second selection unit 10215. The second calibration unit 10214 may transmit a signal (or the second calibration parameter) of the second calibration parameter carried by the second calibration unit 10214 to the second selection unit 10215. In this way, the second selection unit 10215 may select the logic unit based on the logic unit corresponding to the second calibration parameter, to trigger different logic units. Different logic units are selected, so that a model architecture may process the different logic units. To be specific, the model architecture may realize switching between the different logic units.

A logic of a logic selection unit (for example, the second selection unit 10215) is illustrated below. If a numerical value of a calibration parameter (for example, the second calibration parameter) is set to M, a logic unit 1 is enabled; if the numerical value of the calibration parameter (for example, the second calibration parameter) is set to N, a logic unit 2 is enabled; and so on. In this way, if a logic of the logic unit 1 is to be implemented, the numerical value of the second calibration parameter needs to be set to M, to trigger the enabling of the logic unit 1; if a logic of the logic unit 2 is to be implemented, the numerical value of the second calibration parameter needs to be set to N, to trigger the enabling of the logic unit 2; and so on. Through different data of the second calibration parameter, the logic unit corresponding to the second calibration parameter is enabled, and the logic unit is triggered to realize a corresponding logic.

In an embodiment, the logic execution unit 10212 may include different sub-projects. Different sub-projects of a same logic execution unit 10212 use a same logic. The same logic includes different parameters. The different parameters are in one-to-one correspondence with the different sub-projects. The sub-project of the logic execution unit 10212 may be selected based on different parameters calibrated for different sub-projects. If a numerical value of the calibration parameter is set to p, the logic unit is enabled to select a sub-project 1; if the numerical value of the calibration parameter is set to q, the logic unit is enabled to select a sub-project 2; and so on. Through different calibration parameters corresponding to different sub-projects, enabling of different sub-projects is triggered.

FIG. 6 is an architecture diagram of a logic execution unit according to an embodiment of the present disclosure. In a logic execution unit, a parameter may be replaced with a constant, so that a same logic may be used for different sub-projects. During execution of each sub-project, only a parameter needs to be determined as a constant corresponding to the sub-project. Such arrangement can enable different sub-projects in a functional unit to match a same logic execution unit, thereby reducing a quantity of logic execution units, and further reducing a workload of model maintenance.

In an embodiment, an input signal interface of each logic execution unit 10212 is the same, and an output signal interface of each logic execution unit 10212 is the same.

A unit-level output signal summary unit 10213 may uniformly summarize signals outputted by all logic execution units 10212 inside the functional unit to obtain a unit-level output summary signal, so as to output the unit-level output summary signal.

FIG. 7 is an architecture diagram of a unit-level output signal summary unit according to an embodiment of the present disclosure. Different logic execution units output signals. The unit-level output signal summary unit may summarize the output signals of the different logic execution units, and uniformly output a unit-level output summary signal.

Similarly, a model-level output signal summary unit may summarize output signals of different project units, and uniformly output a model-level output summary signal externally.

In an embodiment, a project determination unit (101) in a model architecture is further configured to redetermine a new target unit after a target unit outputs the model-level output summary signal, to realize switching between different project units (102). In this way, switching of use of the model architecture between different project units may be realized, thereby ensuring that the different project units may flexibly use the same model architecture as required, reducing a cumbersome technology as a result of usage of different model architectures between different project units from the source, and applying a same embedded software model architecture to more projects. Therefore, embedded software model architecture a universal platform, and a workload of model maintenance is reduced.

In the embodiments of the present disclosure, the switching between the different project units is performed within the model architecture. In this way, the different project units may use the same model architecture, to reduce model maintenance when different projects have different requirements. In the functional unit, switching between different logic units is performed. In this way, different logic units may use the same model. In the logic unit, switching between different parameters is performed. In this way, switching between different sub-projects may be performed in the same logic unit. In this way, logic switching is realized layer by layer. Therefore, a cumbersome workload of maintaining each model can be further reduced, and the model can be formed as a universal platform.

In an embodiment, the present disclosure further includes a vehicle. The vehicle may include any of the above embedded software model architectures.

During development of embedded software in the field of vehicles, a model design is increasingly adopted, to meet increasing functional requirements. In the vehicle using the embedded software model architecture in the above embodiments of the present disclosure, the project determination unit, the at least one project unit, and the model-level output signal summary unit are arranged in the model. Different projects may be selected through the project determination unit, a logic of a selected project is implemented for the selected project by using the project unit, and finally a model-level output signal is outputted externally. The embedded software model architecture can be applied to different projects, to ensure that different projects may use the same version of the embedded software model architecture, and therefore embedded software model architecture a universal platform, thereby reducing the workload of model maintenance.

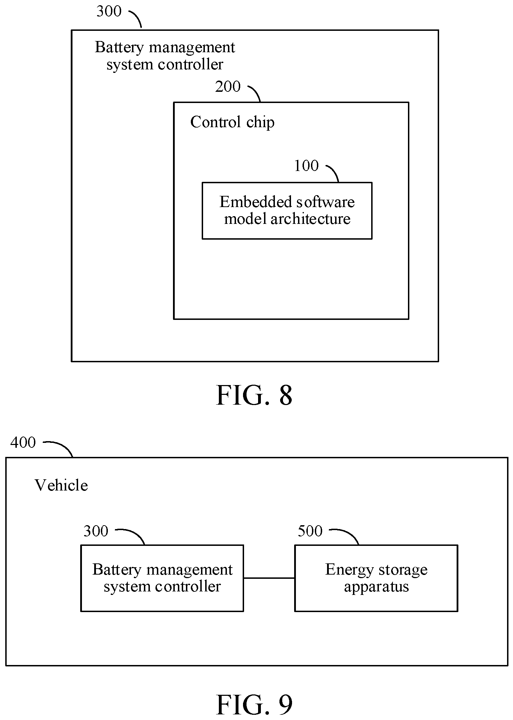

FIG. 8 is a schematic diagram of a battery management system controller according to an embodiment of the present disclosure.

A battery management system controller 300 includes a control chip 200 and an embedded software model architecture 100 arranged on the control chip 200. The embedded software model architecture 100 is the embedded software model architecture shown in FIG. 1. Specific structures and functions of each module are described in the above embodiments. To avoid repetition, details are not described herein again.

The battery management system controller provided in this embodiment includes the embedded software model architecture arranged on the control chip of the battery management system controller. The embedded software model architecture includes the project determination unit, the at least one project unit, and the model-level output signal summary unit. Different projects may be selected through the project determination unit, a logic of a selected project is implemented for the selected project by using the project unit, and finally a model-level output signal is outputted externally. To be specific, the at least one project unit may include multiple project units of different types, and the different project units may all adopt the model architecture. In this way, a same version of the embedded software model architecture can be applied to different projects, and therefore embedded software model architecture a universal platform, thereby reducing the workload of model maintenance.

FIG. 9 is a schematic diagram of a vehicle according to an embodiment of the present disclosure. A vehicle 400 includes the battery management system controller 300 in the above embodiment and an energy storage apparatus 500 electrically connected with the battery management system controller 300.

The battery management system controller 300 includes a control chip 200 and an embedded software model architecture 100 arranged on the control chip 200. The embedded software model architecture 100 is the embedded software model architecture shown in FIG. 1.

During development of embedded software in the field of vehicles, a model design is increasingly adopted, to meet increasing functional requirements. It may be learned from the above that in the vehicle 400 using the battery management system controller 300 of this embodiment, since the battery management system controller 300 is provided with the embedded software model architecture 100 therein, a same version of the embedded software model architecture can be applied to different projects, and therefore embedded software model architecture a universal platform, thereby reducing a workload of model maintenance.

The present disclosure may be a system, an architecture, and/or a computer program product. The computer program product may include a computer-readable storage medium, having computer-readable program instructions loaded thereon for causing a processor to implement all aspects of the present disclosure.

The computer-readable storage medium may be a tangible device that may hold and store instructions used by an instruction execution device. For example, the computer-readable storage medium may be but is not limited to, an electrical storage device, a magnetic storage device, an optical storage device, an electromagnetic storage device, a semiconductor storage device, or any appropriate combination thereof. More specific examples (a non-exhaustive list) of the computer-readable storage medium include: a portable computer disk, a hard disk, a random access memory (RAM), a read-only memory (ROM), an erasable programmable ROM (EPROM or a flash memory), a static RAM (SRAM), a portable compact disk ROM (CD-ROM), a digital versatile disc (DVD), a memory stick, a floppy disk, a mechanical encoding device, for example, a punched card having instructions stored thereon or a protrusion structure in a groove, and any appropriate combination thereof. The computer-readable storage medium used herein is not construed as an instantaneous signal, for example, a radio wave or another freely propagating electromagnetic wave, an electromagnetic wave propagating through a waveguide or another transmission medium (for example, an optical pulse passing through an optical fiber cable), or an electric signal transmitted through an electric wire.

The computer-readable program instructions described herein may be downloaded from the computer-readable storage medium to each computing/processing device, or downloaded to an external computer or an external storage device through a network such as the Internet, a local area network (LAN), a wide area network (WAN), and/or a wireless network. The network may include a copper transmission cable, optical fiber transmission, wireless transmission, a router, a firewall, a switch, a gateway computer, and/or an edge server. A network adapter card or a network interface in each computing/processing device receives computer-readable program instructions from the network, and forwards the computer-readable program instructions for storage in the computer-readable storage medium in each computing/processing device.

The computer program instructions for performing the operations of the present disclosure may be assembly instructions, instruction set architecture (ISA) instructions, machine instructions, machine-related instructions, microcode, firmware instructions, state setting data, or source code or target code written in any combination of one or more programming languages. The programming languages include an object-oriented programming language such as Smalltalk or C++, and a conventional procedural programming language such as C programming language or a similar programming language. The computer-readable program instructions may be completely executed on a user computer, partially executed on the user computer, executed as an independent software package, partially executed on the user computer and partially executed on a remote computer, or completely executed on a remote computer or a server. In a situation involving the remote computer, the remote computer may be connected to the user computer through any type of network including a LAN or a WAN, or may be connected to an external computer (for example, connected to the external computer through the Internet by using an Internet service provider). In some embodiments, an electronic circuit is personalized and customized through state information of the computer-readable program instructions, for example, a programmable logic circuit, a field programmable gate array (FPGA), or a programmable logic array (PLA). The electronic circuit may execute the computer-readable program instructions, thereby implementing all aspects of the present disclosure.

All of the aspects of the present disclosure is described herein with reference to the flowcharts and/or the block diagrams of the method, the apparatus (system), and the computer program product in the embodiments of the present disclosure. It should be understood that each block in the flowcharts and/or the block diagrams and a combination of the blocks in the flowcharts and/or the block diagrams may be both implemented through the computer-readable program instructions.

The computer-readable program instructions may be provided to a general-purpose computer, a dedicated computer, or a processor of another programmable data processing apparatus, to produce a machine. In this way, the instructions, when executed through the computer or the processor of the another programmable data processing apparatus, generate an apparatus that implements the functions/actions specified in one or more blocks in the flowcharts and/or the block diagrams. The computer-readable program instructions may alternatively be stored in the computer-readable storage medium. The instructions cause the computer, the programmable data processing apparatus, and/or another device to operate in a specific manner. Therefore, the computer-readable storage medium storing the instructions includes a manufactured product, which includes instructions for implementing all aspects of the functions/actions specified in one or more blocks in the flowcharts and/or the block diagrams.

The computer-readable program instructions may alternatively be loaded to the computer, the another programmable data processing apparatus, or the another device, so that a series of operations and steps are performed on the computer, the another programmable data processing apparatus, or the another device, to generate a process of computer implementation. In this way, the instructions executed on the computer, the another programmable data processing apparatus, or the another device implement the functions/actions specified in one or more blocks in the flowcharts and/or the block diagrams.

The flowcharts and block diagrams in the accompanying drawings show a system architecture, functions, and operations that may be implemented by using the system, the method, and the computer program product according to multiple embodiments of the present disclosure. In this regard, each block in the flowcharts or the block diagrams may represent a module, a program segment, or a part of an instruction. The module, the program segment, or the part of the instruction includes one or more executable instructions for implementing a specified logic function. In some alternative implementations, functions annotated in the blocks may also be performed in an order different from that annotated in the accompanying drawings. For example, two consecutive blocks may actually be executed basically in parallel, or may sometimes be executed in a reverse order, which depends on the functions involved. It should also be noted that each block in the block diagrams and/or the flowcharts and a combination of blocks in the block diagrams and/or the flowcharts may be implemented by a dedicated hardware-based system configured to perform a specified function or operation, or may be implemented by a combination of dedicated hardware and computer instructions. It is well-known to a person skilled in the art that implementations through hardware, software, and a combination of software and hardware are all equivalent.

The embodiments of the present disclosure have been described above. The above description is exemplary, non-exhaustive, and is not limited to the disclosed embodiments. Many modifications and changes are apparent to a person of ordinary skill in the art without departing from the scope and spirit of the described embodiments. The selection of the terms used herein is intended to best explain the principles of the embodiments, practical applications, or technical improvements in the market, or to enable another person of ordinary skill in the art to understand the embodiments disclosed herein. The protection scope of the present disclosure is defined by the appended claims.

## Claims

1. An embedded software model architecture (100), comprising a project determination unit (101), at least one project unit (102), and a model-level output signal summary unit (103),
the project determination unit (101) being configured to output, based on a target unit that the embedded software model architecture (100) needs to process, a project enable signal corresponding to the target unit, wherein the target unit is one of the at least one project unit (102); the project enable signal is used for triggering startup of the target unit to realize a corresponding logic control strategy;
the target unit is configured to receive the project enable signal, and output a unit-level output summary signal based on the project enable signal; and
the model-level output signal summary unit (103) is configured to receive the unit-level output summary signal, and output a model-level output summary signal.

2. The embedded software model architecture (100) according to claim 1, wherein the project determination unit (101) is configured to control the entire software model architecture (100), and perform switching between the at least one project unit (102).

3. The embedded software model architecture (100) according to claim 1 or 2, wherein the project determination unit (101) comprises a first calibration unit (1011) and a first selection unit (1012);
the first calibration unit (1011) is configured to output at least one first calibration parameter based on the target unit, wherein the at least one first calibration parameter is in one-to-one correspondence with the at least one project unit (102); and
the first selection unit (1012) is configured to receive the at least one first calibration parameter, and output the project enable signal based on the at least one first calibration parameter.

4. The embedded software model architecture (100) according to claim 3, wherein the at least one project unit (102) is arranged in parallel, and is connected with the project determination unit (101).

5. The embedded software model architecture (100) according to any of claims 1 to 4, wherein
the at least one project unit (102) is configured to receive an external input signal of the embedded software model architecture (100); and
the target unit is further configured to output the unit-level output summary signal based on the external input signal of the embedded software model architecture (100) and the project enable signal.

6. The embedded software model architecture (100) according to any of claims 1 to 5, wherein each project unit (102) of the at least one project unit (102) comprises at least one functional unit (1021); and each functional unit (1021) of the at least one functional unit (1021) is configured to output the unit-level output summary signal.

7. The embedded software model architecture (100) according to claim 6, wherein the at least one functional unit (1021) is independent of each other; and the at least one functional unit (1021) is arranged in parallel.

8. The embedded software model architecture (100) according to claim 6 or 7, wherein each functional unit (1021) of the at least one functional unit (1021) comprises a logic determination unit (10211), at least one logic execution unit (10212), and a unit-level output signal summary unit (10213);
the logic determination unit (10211) is configured to output a logic enable signal based on a sub-project corresponding to the project unit (102);
each logic execution unit (10212) of the at least one logic execution unit (10212) is configured to receive the logic enable signal, and output a first logic signal based on the logic enable signal; and
the unit-level output signal summary unit (10213) is configured to summarize the first logic signal outputted by the at least one logic execution unit (10212), to obtain the unit-level output summary signal.

9. The embedded software model architecture (100) according to claim 8, wherein the logic determination unit (10211) comprises a second calibration unit (10214) and a second selection unit (10215);
the second calibration unit (10214) is configured to output at least one second calibration parameter based on the target unit, wherein the at least one second calibration parameter is in one-to-one correspondence with the at least one logic execution unit (10212); and
the second selection unit (10215) is configured to receive the at least one second calibration parameter, and output the logic enable signal based on the at least one second calibration parameter.

10. The embedded software model architecture (100) according to claim 8 or 9, wherein an input signal interface of each logic execution unit (10212) of the at least one logic execution unit (10212) is the same; and an output signal interface of each logic execution unit (10212) of the at least one logic execution unit (10212) is the same.

11. The embedded software model architecture (100) according to any of claims 8 to 10, wherein each logic execution unit (10212) of the at least one logic execution unit (10212) comprises different sub-projects; different sub-projects of a same logic execution unit (10212) use a same logic; the same logic comprises different parameters; and the different parameters are in one-to-one correspondence with the different sub-projects.

12. The embedded software model architecture (100) according to any of claims 1 to 11, wherein the project determination unit (101) is further configured to redetermine a new target unit after the target unit outputs the model-level output summary signal, in order to realize switching between different project units (102).

13. The embedded software model architecture (100) according to any of claims 1 to 12, wherein an input interface of each project unit (102) of the at least one project unit (102) is the same; and an output interface of each project unit (102) of the at least one project unit (102) is the same.

14. A battery management system controller (300), comprising a control chip (200) and an embedded software model architecture (100) arranged on the control chip (200), the embedded software model architecture (100) being the embedded software model architecture (100) according to any of claims 1 to 13.

15. A vehicle (400), comprising the battery management system controller (300) according to claim 14 and an energy storage apparatus (500) electrically connected with the battery management system controller (300).
